(19) **Europäisches Patentamt / European Patent Office / Office européen des brevets**

(11) **EP 1 111 364 B1**

(12) **FASCICULE DE BREVET EUROPEEN**

(45) Date de publication et mention
de la délivrance du brevet:
**14.10.2009 Bulletin 2009/42**

(51) Int Cl.:
***G01M 15/00*** *(2006.01)*

(21) Numéro de dépôt: **00403616.6**

(22) Date de dépôt: **21.12.2000**

(54) **Détection de l'endommagement de pièces d'un moteur**

Schadendetektion von Motorteilen

Damage detection of motor pieces

(84) Etats contractants désignés:
**CH DE FR GB LI**

(30) Priorité: **23.12.1999 FR 9916323**

(43) Date de publication de la demande:
**27.06.2001 Bulletin 2001/26**

(73) Titulaire: **SNECMA**
**75015 Paris (FR)**

(72) Inventeurs:
• **Dusserre-Telmon, Guy Franck Paul**
**77115 Sivry-Courtry (FR)**
• **Flores, David**
**91450 Mennecy (FR)**
• **Prieux, Frédéric**
**75018 Paris (FR)**

(56) Documents cités:
EP-A- 0 889 313          WO-A-97/38292
FR-A- 2 155 250          GB-A- 2 190 198
US-A- 4 010 637          US-A- 4 424 709
US-A- 4 978 909          US-A- 5 309 379
US-A- 5 365 787          US-A- 5 610 339
US-A- 5 726 905          US-A- 6 142 228

**EP 1 111 364 B1**

## Description

## Domaine de l'invention

L'invention se situe dans le domaine des procédés de surveillance permanente d'une pièce mécanique en particulier une pièce rotative importante d'un moteur par exemple un roulement de palier ou un engrenage d'un moteur d'avion. Le procédé selon l'invention est relatif à une surveillance dans laquelle on traite le signal issu d'un ou plusieurs capteurs d'accélération. Le traitement du signal vibratoire issu du capteur conduit à la détermination d'une ou plusieurs grandeurs résultant du signal ou dérivées du signal par le traitement. Ces grandeurs sont comparées à des seuils afin de détecter que la pièce mécanique surveillée a subi un endommagement.

## Etat de la technique antérieure

Il est connu de disposer des capteurs d'accélération en des lieux où ces capteurs peuvent détecter des vibrations en provenance de pièces mécaniques à surveiller ou de la machine en général, puis de traiter les signaux provenant de ces capteurs pour détecter une anomalie significative du signal émis par le capteur par rapport au signal reçu en l'absence de défaut.

Idéalement, la détection de telles anomalies devrait permettre une prévision de durée de vie restante de la pièce sous surveillance avant endommagement grave conduisant à une rupture ou à un disfonctionnement sérieux.

En pratique, on n'a pas en général une expérience suffisante sur un assez grand nombre de pièces pour obtenir des données statistiquement significatives pour arriver à une telle prévision.

En pratique, le résultat du traitement est tel que l'on puisse détecter un endommagement de façon suffisamment précoce pour qu'au moment de la détection, l'organe fonctionne encore de façon satisfaisante et que l'on ait une certitude raisonnable qu'il va continuer à fonctionner de façon satisfaisante, de préférence jusqu'à une prochaine visite périodique de cet organe et au minimum jusqu'à une prochaine escale lorsque l'organe est monté sur une machine volante.

Les demandes de brevets EP 0 889 313 à 316 A2 déposées simultanément le 3 juillet 1998 offrent un bon exemple de telles méthodes.

Dans ces demandes, quinze capteurs d'accélération et deux capteurs d'azimut destinés à capter des vitesses de rotation sont disposés en divers endroits à proximité d'organes composant ensemble un bloc de transmission de mouvements à des organes rotatifs d'un hélicoptère, en particulier à l'arbre du rotor et à l'hélice de stabilisation arrière.

Toutes les méthodes de traitement de signal décrites dans ces quatre demandes comportent :

- une étape d'acquisition du signal d'un capteur d'accélération ; il s'agit là d'une étape de numérisation du signal du capteur réalisée par exemple au moyen d'un échantillonneur bloqueur et d'un convertisseur analogique-numérique ;
- une étape de transformation du signal temporel ainsi capté, en un signal dans le domaine fréquentiel, ceci pour chacune des trois demandes '313, '314 et '315 ; on obtient ainsi une séquence initiale de valeurs déterminant chacune une fréquence de vibration et l'amplitude associée à cette fréquence ; le traitement décrit ensuite dans la demande '313 prévoit une sélection et un traitement des échantillons fréquentiels pour obtenir une séquence finale d'échantillons.

Après un retour dans le domaine temporel, à partir de la séquence finale d'échantillons, on calcule un moment d'ordre 6 de ce signal temporel que l'on compare à un seuil prédéterminé pour éventuellement actionner une alarme. La méthode décrite dans la demande '313 est destinée à prévoir l'arrivée d'une anomalie se situant au niveau d'un arbre extérieur.
Le traitement décrit ensuite dans la demande '314 prévoit quant à lui la sélection d'un échantillon déterminé de fréquence, le calcul de l'amplitude de cet échantillon et sa comparaison à une valeur de référence, le résultat étant comparé à un seuil.

Cette méthode relativement frustre est destinée à détecter des anomalies se développant rapidement en vol.

Le traitement décrit ensuite dans la demande '315 prévoit la sélection de deux groupes d'échantillons de fréquence, le calcul de l'énergie associée à ces deux groupes, un calcul d'écart d'énergie entre les deux groupes et la comparaison de cet écart à un seuil.

Cette méthode est destinée à détecter un défaut sur un arbre comportant deux engrenages.

Le traitement décrit dans la demande '316 prévoit quant à lui après la phase d'acquisition, une transformation de Hilbert du signal obtenu, la définition d'un nombre complexe ayant le signal pour partie réelle et la transformée de Hilbert pour partie imaginaire, le calcul de la phase de ce nombre complexe et de sa dérivée par rapport au temps et enfin la comparaison de cette dérivée à une valeur seuil.

Dans chacune de ces quatre demandes, on cherche des ratios ou des variations intervenant sur ce qui est appelé "une fréquence d'engrènement" ou des harmoniques de cette fréquence. On suppose qu'il s'agit du nombre de tours par seconde de la roue dentée sous surveillance.

Les raisons pour lesquelles, dans ces demandes, certaines grandeurs, plutôt que d'autres sont suivies, ne sont pas explicitées, ce qui fait qu'on ne sait pas dans quelle mesure l'enseignement de ces demandes peut être utilisé dans un contexte différent de celui qui est décrit.

L'enseignement que l'on peut tirer de ces exemples est que l'analyse de signaux de vibration de capteurs placés à proximité de pièces en rotation peut donner des indications sur l'état mécanique de ces pièces. En particulier, une amorce de crique ou un développement de crique peut être repérée grâce à une telle analyse. Cependant, pour chaque cas particulier, il convient de déterminer quelles sont les fréquences qu'il convient d'analyser et parmi toutes les possibilités de traitement quelles sont les grandeurs les plus significatives à surveiller pour avoir une information significative sur la pièce mécanique surveillée.

**Brève description de l'invention**

L'invention est destinée à détecter de façon précoce un endommagement survenant en particulier à une pièce tournante d'un moteur par exemple un roulement à billes ou rouleaux, ou un engrenage. Il est cependant possible d'étendre le champ de l'invention à une pièce non tournante, par exemple une pièce fixe par exemple un capotage ou mobile selon un autre mouvement, par exemple une bielle ou une soupape et sa tige. Selon l'invention, on réalise comme dans l'art antérieur une saisie numérique du signal délivré par au moins un capteur d'accélération dédié à la surveillance vibratoire du moteur. Ce signal temporel est ensuite, comme dans l'art antérieur, transformé dans le domaine fréquentiel. Il a été vu que dans l'art antérieur, un filtrage est ensuite effectué pour sélectionner des fréquences caractéristiques du défaut recherché et qui ont été appelées dans les brevets cités "fréquences d'engrènement". Des traitements sont ensuite effectués sur ces fréquences caractéristiques pour obtenir des grandeurs que l'on peut comparer à des seuils pour en tirer des conclusions relatives à un éventuel endommagement de la pièce mécanique suivie.

Les inventeurs de la présente invention ont remarqué que le signal fréquentiel obtenu à partir de la transformation du signal temporel issu du capteur est très bruité. Ils ont remarqué également que le signal correspondant à ce qui a été appelé la fréquence d'engrènement arrive de façon très affaiblie au niveau du capteur, de sorte qu'il est difficile d'isoler l'éventuelle présence de cette fréquence d'engrènement du bruit ambiant nécessairement présent sur un moteur.

Les inventeurs ont remarqué également que cette "fréquence d'engrènement" peut être présente même en l'absence de défaut, du seul fait que les dents engrènent les unes dans les autres. Ce qu'il convient de détecter est donc une modification significative du spectre associé à cette fréquence d'engrènement, par exemple une modification du nombre de raies harmoniques de cette fréquence et/ou de l'amplitude de vibration à cette fréquence d'engrènement ou à ses harmoniques.

Ils ont également émis l'hypothèse que cette fréquence d'engrènement pouvait être présente en temps que fréquence de modification d'une ou plusieurs fréquences fondamentales du moteur. Par fréquences fondamentales du moteur, on désigne la fréquence de rotation -nombre de tours par seconde- du moteur, ou pour les moteurs ayant un compresseur basse pression et un compresseur haute pression, les fréquences de rotation de chacun de ces corps. D'une façon générale, une fréquence fondamentale d'un moteur est une fréquence de rotation d'une partie importante, du point de vue moment d'inertie, du moteur. Une fréquence résultant d'un endommagement sera une fréquence à laquelle cet endommagement produit un choc. Idéalement, la fréquence d'engrainement ou de roulement résulterait d'une succession à cette fréquence d'impulsions de DIRAC.

Dans la pratique, ces impulsions ont une forme moins pure qu'une impulsion de DIRAC. Le spectre du signal de défaut est donc composé de raies à la fréquence correspondant à la nature du défaut et à des fréquences harmoniques. L'enveloppe de ce spectre de. raies est déterminée par la forme des impulsions. Il sera vu que dans le cas de la recherche d'un endommagement d'une bague de roulement la fréquence d'endommagement spécifique de la présence du défaut représente, par unité de temps, le nombre de fois où ce défaut est heurté par une bille ou un rouleau du roulement. Dans le cas d'un engrenage dont par exemple une dent d'une première roue serait criquée ou endommagée, la fréquence résultant du dommage serait la fréquence avec laquelle cette dent entre en contact avec les dents d'une seconde roue engrenant sur la première. On voit par ces exemples que, connaissant la structure du moteur, sa vitesse de rotation, donc ses fréquences fondamentales instantanées, il est possible de connaître une fréquence résultant du dommage, émise par la pièce que l'on surveille.

Le problème est donc de repérer la présence ou la modification de caractéristiques de cette fréquence résultant de l'endommagement de façon suffisamment stable et constante pour l'isoler du bruit, et en conclure à la présence d'un défaut de la pièce suivie, ceci sans générer de fausses alarmes. Il est également important de repérer cette fréquence résultant de l'endommagement alors que le défaut à l'origine de l'apparition de cette fréquence est encore à un stade précoce de son développement. Par exemple pour un roulement, un stade précoce est constitué par un simple écaillage de l'une des surfaces de roulement. Cependant, à ce stade précoce, l'amplitude de la fréquence ou la modification des caractéristiques de son spectre associé, résultant du défaut est faible de sorte qu'il est difficile de les distinguer du bruit.

Selon l'invention, on va comme dans l'art antérieur échantillonner une séquence du signal d'au moins un capteur d'un signal vibratoire d'accélération, avec une fréquence d'échantillonnage suffisante pour que la condition de Shannon soit remplit pour la plus élevée des fréquences à enregistrer. On va ensuite selon une caractéristique propre à la présente invention vérifier que le régime moteur est resté stable pendant toute la durée de la séquence, de façon à rejeter les séquences pour lesquelles la variation relative du régime de rotation se situe au-dessus d'un seuil prédéterminé. On va ensuite, comme dans l'art antérieur, convertir le signal temporel obtenu en un signal fréquentiel, par exemple par transformation de Fourrier et en éliminer les fréquences fondamentales du moteur.

Ensuite, selon une caractéristique importante de l'invention, on va effectuer une corrélation entre le signal fréquentiel obtenu et le même signal décalé d'une fréquence V.

La corrélation de deux fonctions est la mesure de la ressemblance qui existe entre elles : c'est essentiellement un procédé de comparaison.

En numérique, les signaux sont représentés par des suites de nombres qui sont des échantillons successifs d'une forme d'onde continue.

La fonction de corrélation de f (k) et g(k), les deux suites numériques obtenues par l'échantillonnage de deux fonctions continues f(t) et g(t), s'exprime mathématiquement par la relation :

$$S(k) = \int_{i=-\infty} f(i).g(i+k)$$

avec i = indice de l'échantillon, et k = indice de décalage.

Lorsque f et g sont des fonctions différentes, on parle d'intercorrélation.

Lorsque f et g sont des fonctions identiques, on parle d'autocorrélation.

Dans le cas d'un signal fréquentiel exprimé dans le plan complexe amplitude/fréquence, on parle de spectre et de cohérence spectrale.

Le calcul de cohérence spectrale entre la transformée dans le domaine fréquentiel du signal vibratoire capté et cette même transformée décalée d'une fréquence V, permet d'identifier les ressemblances entre les deux transformées. Dans ces conditions, les fréquences de bruit, instables par nature vont être éliminées pour ne laisser subsister que les fréquences stables, c'est-à-dire celles qui résultent d'une origine stable.

Ce sont dans ce cas les fréquences fondamentales, leurs harmoniques, les combinaisons linéaires de ces fréquences et des éventuelles fréquences de modulation stables.

Ces fréquences de modulation stables peuvent comprendre, même en l'absence de défaut, la fréquence d'engrènement ou dans le cas d'un roulement, une fréquence de roulement résultant du nombre de billes ou de rouleaux et de la fréquence de rotation de l'ensemble formé par ces billes ou rouleaux.

Si par exemple $F_{N1}$ et $F_{N2}$ sont les fréquences de rotation de masses importantes du moteur, par exemple les rotors d'un corps basse pression et d'un corps haute pression respectivement, le signal délivré par le capteur comportera les fréquences fondamentales $F_{N1}$ et $F_{N2}$. Il pourrait aussi comporter les fréquences harmoniques de ces fréquences par exemple $2F_{N1}$, $3F_{N1}$, $2F_{N2}$, $3F_2$. Si de plus, la chaîne de transmission est telle qu'un signal comportant la fréquence $F_{N1}$ passe par un organe vibrant notamment par exemple à la fréquence $2F_{N2}$, on aura des fréquences résultant d'une modulation d'une fréquence par une autre, par exemple $2F_{N2} + F_{N1}$, $2F_{N2} - F_{N1}$. Pour ces raisons, le spectre d'un moteur présentera pour chaque cas particulier, c'est-à-dire pour chaque type de moteur et chaque emplacement de capteur et aussi pour des plages de régime moteur un spectre de raies caractéristiques.

Pour un type de moteur, un calcul de cohérence glissant, c'est-à-dire en faisant varier le décalage V pas à pas à partir de valeurs de fréquences résultant de combinaisons de valeurs fondamentales obtenues sur de petits multiples des fréquences fondamentales par exemple les multiples compris, bornes incluses, entre 0 et 4 et autour de ces combinaisons, permettra de repérer pour les régimes moteurs étudiés, par exemple pour les régimes les plus longtemps utilisés au cours de chaque vol, les raies présentes normalement, c'est-à-dire en l'absence de défauts. Il conviendra ensuite d'effectuer la même recherche de raies avec un moteur équipé d'une pièce présentant à un stade précoce le défaut que l'on recherchera ensuite à détecter.

Pour cette recherche, on fixera le décalage V à des valeurs de fréquence résultant de la modulation des fréquences présentes en fonctionnement normal par la fréquence résultant de l'endommagement ou par des harmoniques de cette fréquence.

Pour que la méthode selon l'invention présente de l'intérêt, il faut que le spectre résultant du défaut soit différent du spectre en fonctionnement normal, par la présence d'une fréquence qui n'est pas présente avec une amplitude suffisante pour être détectée même au moyen du calcul de cohérence spectral. En effet, une modification éventuelle de l'amplitude de cette fréquence en raison de la présence du défaut n'entraîne pas nécessairement une variation significative de la valeur du pic de cohérence.

Par contre, une telle modification d'amplitude d'une fréquence en raison du défaut peut être détectée par les méthodes connues comportant un filtrage passebande centré sur la fréquence recherchée et un calcul de l'énergie ou de l'amplitude du spectre résultant du filtrage.

En résumé, l'invention est relative à un procédé de détection précoce de l'apparition d'un défaut d'une pièce d'un moteur, le procédé comportant :

- une phase préliminaire d'identification de raies spectrales fréquentielles présentes au cours du fonctionnement du moteur en l'absence de défaut, puis en présence du défaut de façon à identifier des raies spectrales spécifiques du défaut, ceci pour au moins un régime de fonctionnement du moteur,
- une phase de détection au cours de laquelle de façon. itérative au cours du fonctionnement du moteur :

- on acquiert au cours d'une séquence d'acquisition une suite d'échantillons numériques représentative d'un signal vibratoire d'accélération,
- on vérifie qu'au cours de ladite séquence d'acquisition le régime du moteur est resté stable et on applique en temps réel ou en temps différé auxdites séquences stables acquises les traitements ci-après,
- on transforme le signal acquis par échantillonnage temporel en un signal fréquentiel, en éliminant les fréquences fondamentales du moteur et leurs harmoniques,
- on effectue au moins un calcul de cohérence normée entre ledit signal fréquentiel et le même signal fréquentiel décalé d'une valeur de fréquence correspondant à la valeur d'une des fréquences spécifiques du défaut, détectée au cours de la phase préliminaire,
- on compare la valeur d'un pic de cohérence obtenu par le calcul de cohérence à un premier seuil de cohérence et on mémorise une valeur de détection 1 si ce pic est supérieur à ce premier seuil et une valeur 0 dans le cas contraire,
- on fait la somme de p valeurs de détection mémorisées que l'on divise par p pour obtenir un ratio de détection,
- on décide qu'un défaut est présent si le ratio de détection est supérieur ou égal à un second seuil prédéterminé.

De préférence, les p valeurs de détection que l'on utilise pour établir le ratio de détection sont des valeurs correspondant à P séquences choisies parmi les plus récentes enregistrées dans des gammes de régime moteur jugées intéressantes. Il ne s'agira pas nécessairement des plus récentes dans le temps de façon absolue, mais des plus récentes dans ces plages de régime moteur que l'on jugera particulièrement intéressantes.

Le nombre P est un nombre entier supérieur ou égal à 1.

## Brève description des dessins

D'autres caractéristiques du procédé selon l'invention et des variantes seront explicitées au cours de la description d'exemples de réalisation qui seront décrits ci-après en référence aux dessins annexés dans lesquels :

- la figure 1 représente schématiquement une coupe longitudinale d'un roulement de palier,
- la figure 2a représente une coupe schématique partielle d'un roulement par un plan perpendiculaire à l'axe du roulement, la figure 2b par un plan axial du roulement.
- la figure 3 est un organigramme schématisant un mode préféré de réalisation de l'invention

## Description d'exemples de réalisation

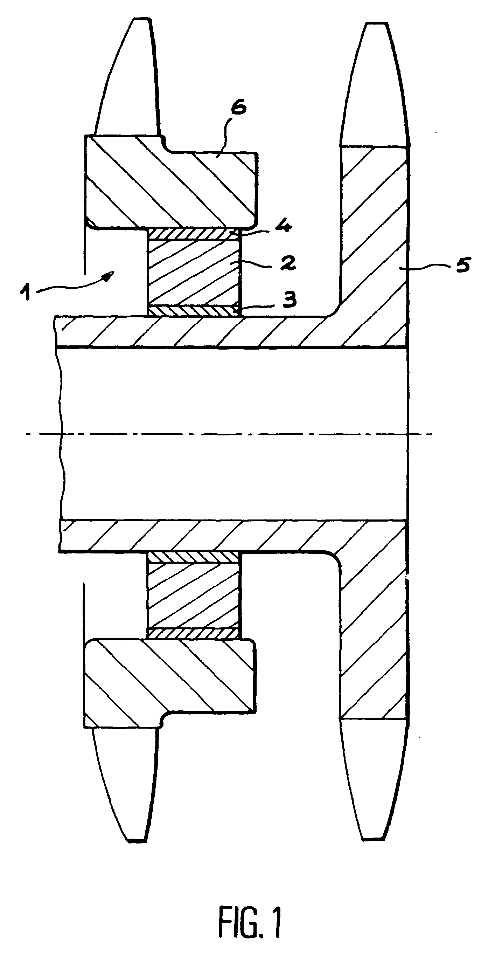

Le procédé selon l'invention a été utilisé pour la surveillance de l'état d'un palier de rotor d'un moteur. Ce palier est représenté de façon très schématique en coupe axiale sur la figure 1.

Le palier comporte un roulement 1 à rouleaux 2. Les rouleaux roulent entre deux bagues, une bague interne 3 et une bague externe 4.

La bague interne 3 centre un arbre 5 d'un rotor d'un corps basse pression du moteur. Ce corps n'est pas autrement représenté car il n'est pas utile à la compréhension de l'invention. La bague externe 4 centre un arbre 6 d'un corps haute pression du même moteur.

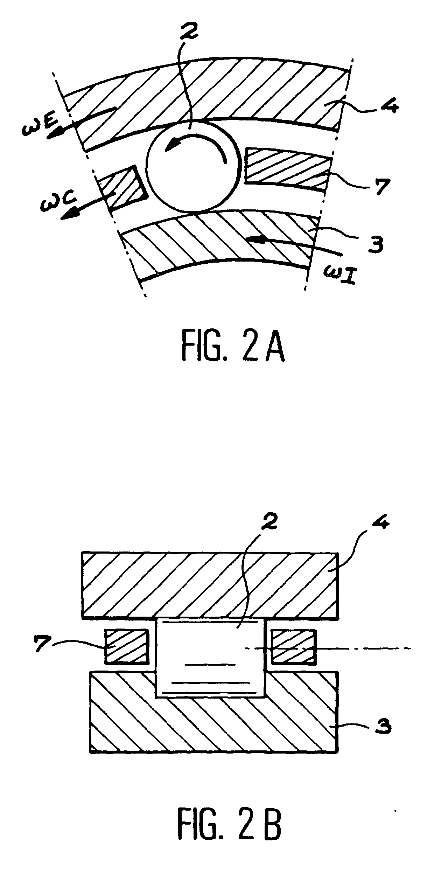

Des coupes transversales et axiales partielles de ce roulement sont représentées figures 2a et 2b respectivement. Les arbres 5 et 6 (figure 1) tournent à des vitesses de rotation différentes, $W_e$ pour l'arbre 6 centré par la bague extérieure 4 et $W_i$ pour l'arbre 5 centré par la bague intérieure 3. On peut considérer que les vitesses de rotation $W_e$ et $W_i$ sont indépendantes l'une de l'autre. Elles sont cependant connues à tout moment. La bague extérieure liée au rotor du corps haute pression tourne plus vite que la bague intérieure et les deux bagues tournent dans le même sens.

Entre les deux bagues se trouvent Z corps roulants 2, par exemple des rouleaux, maintenus par une cage 7. Au glissement près, faible en régime stable, la cage 7 tourne à une vitesse $W_c$. On définit un facteur de roulement $\gamma$ comme étant le rapport entre le diamètre d d'un rouleau au diamètre dm du cylindre médian des deux bagues 3 et 4.

Le défaut que l'on cherche à détecter est un défaut de la bague extérieure 4 du roulement par exemple un écaillage. Ce défaut est représenté par une étoile sur la figure 2a.

La vitesse $W_c$ de rotation de la cage est donnée par la formule :

$$ W_c \ = \ \frac{1 \ - \ \gamma}{2} \ W_i \ + \ \frac{1 \ + \ \gamma}{2} \ W_e $$

La fréquence $f_D$ résultant de l'endommagement sera égale au nombre de fois où un rouleau heurte le défaut.

Si l'on néglige un facteur de glissement des corps roulants, cette fréquence fD est proportionnelle à la différence $N2 - N_1$ entre le nombre de tour par seconde de la bague extérieure et le nombre de tour par seconde de la bague intérieure.

L'hypothèse émise par les inventeurs est que cette fréquence $f_d$ va se transmettre au capteur d'un signal vibratoire d'accélération aux travers d'organes eux-mêmes vibrants, en particulier aux fréquences fondamentales.

Un calcul de cohérence est effectué entre la transformée de Fourier du signal vibratoire capté et la transformée de Fourier du même signal décalé d'une fréquence cyclique V.

La cohérence spectrale asymétrique d'un signal x(t) pour la fréquence cyclique V est donnée par la formule :

$$C_x^v(f) = \frac{E\,[x(f)\,.x^*\,(f\,-\,V)\,]}{(E\,[|x(f)|^2.\ E\,[|x(f\,-\,V)|^2)^{1/2}}$$

Dans cette formule

$C_x^v(f)$ est la valeur de cohérence spectrale entre le signal vibratoire capté par le capteur et le même signal décalé de la fréquence cyclique V,

X(f) représente la transformée de Fourrier du signal vibratoire X(t) X*(f-v) représente la fonction conjuguée de la transformée du signal vibratoire x(t) décalée de la fréquence cyclique V,

E [.....] désigne l'espérance mathématique,

E [|X(f)|²] et E [|X(f - v)|²] représentent respectivement les densités spectrales de puissance des signaux X(t) et de la transformée de Fourrier inverse de X(f-v),

E [X(f) .X * (f - v) représente la densité spectrale d'interaction des signaux x(t) et de la transformée de Fourrier inverse de X(f-v).

Des informations complémentaires pourront être trouvées dans HURD "An investigation of Periodically correlated processes" Ph. D dissertation in engineering. DUKE UNIVERSITY 1970 et dans GARDNER "Statistical Spectral analysis. A non probabilistic Theory" Prentice Hall 1988.

La méthode d'estimation utilisée est celle du périodogramme moyenné qui utilise la transformée de Fourrier rapide. Max et LACOUME "Méthodes et techniques de traitement de signal et application aux mesures physiques, Tome 1 : principes généraux et méthodes classiques" 5ème édition, MASSON 1996.

La cohérence spectrale est normée donc comprise entre 0 et 1. Compte tenu du fait que l'on travaille sur un signal de durée finie et de plus bruité, on ne peut avoir de valeurs égales à 0 ou 1. Une forte cohérence spectrale, par exemple supérieure à 0,8 pour les fréquences f et (f-v) indique que ces fréquences sont issues du même phénomène physique, par exemple par modulation d'un signal source par exemple, à la fréquence $F_{N1}$ ou $F_{N2}$ par un signal périodique à la fréquence de défaut $F_D = (F_{N2} - F_{N1})$.

En fonction de la position du capteur par rapport au défaut, il pourra y avoir des modulations dues à un balourd des arbres 6 ou 5 entraînant une modulation par une fréquence $F_{N2}$ et/ou $F_{N1}$ respectivement. Dans le cas particulier étudié, il a été noté que les fréquences de modulation de la fréquence de défaut étaient des fonctions de la différence ($F_{N2} - F_{N1}$) de fréquence de rotation des deux arbres.

Dans ces conditions, la recherche permanente de l'apparition du défaut basée sur la recherche de la fréquence de défaut comprend de façon itérative comme expliqué plus haut :

- une séquence de prise d'échantillons ; cette séquence peut avoir une durée comprise par exemple entre 30 secondes et une minute ;
- la vérification que pendant la durée de la séquence le régime est resté stable, et le rejet des séquences ne répondant pas à cette condition.

Il convient de noter que selon une variante, on peut ne lancer la séquence de prise d'échantillon que si le moteur tourne à un régime se situant dans une plage dont il a été établi au cours de la phase préliminaire qu'elle présentait un intérêt particulier.

Si la séquence répond aux conditions de stabilité requise, on commence le traitement selon l'invention.

Selon le mode de réalisation ici décrit, on divise la séquence en n parties, de façon à obtenir par exemple des sous-séquences de une seconde à quelques secondes chacune. Dans le mode préféré de réalisation les sous-séquences se recouvrent partiellement l'une l'autre, par exemple de 50%.

On effectue ensuite une transformée de Fourrier discrète de chaque sous-séquence.

On effectue le calcul de cohérence sur chacune des sous-séquences en prenant pour valeur de décalage V, les différentes fréquences de modulation résultant du modèle de transmission décrit plus haut.

Chaque calcul de cohérence permet d'obtenir n échantillons de cohérence. La cohérence moyenne est égale à la moyenne des échantillons de cohérence.

Si pour au moins l'un des décalages, la cohérence moyenne normée est supérieure à un seuil de 0,8, il y a cohérence et on le mémorise. On continue ensuite le traitement comme décrit plus haut.

Lorsque pour les p de préférence dernières séquences consécutives et pour un même décalage, le nombre de séquences à cohérence positive est supérieur à un seuil prédéterminé, ou ce qui revient au même si le ratio du nombre de cohérences positives par rapport au nombre p de séquences est supérieur à un seuil, il est décidé qu'il y a un défaut.

De façon alternative ou complémentaire, on peut, pour chaque séquence à l'intérieur d'une suite de séquences, effectuer un calcul de cohérence glissant, et mémoriser les valeurs de fréquence V pour lesquelles est obtenu un pic de cohérence supérieur au seuil prédéterminé par exemple 0,8. On constitue ainsi une signature du régime au cours duquel la séquence a été effectuée. On compare cette signature à une signature antérieure mémorisée.

On compte les séquences pour lesquelles il y a un écart significatif entre la signature actuelle et la signature mémorisée. On décide qu'il y a anomalie si pour un nombre Q de séquences consécutives, il y a un nombre r de séquences s'écartant de la signature mémorisée supérieur à un seuil prédéterminé (r ≤ Q).

Les expériences conduites par la demanderesse sur différents moteurs de même type ont permis de constater que dans certains cas le calcul de cohérence ne conduisait pas toujours à une détection du défaut alors qu'il est détectable par d'autres méthodes. D'autres fois le défaut est détecté par la méthode de cohérence alors qu'il ne l'est pas par d'autres méthodes. C'est pourquoi, selon une méthode préférée de détection de défaut permettant de plus une émission et une différentiation de niveaux d'alerte on procède à des traitements additionnels. Certains de ces traitements peuvent être effectués en parallèle au traitement ci-dessus décrit.

Pour ces traitement après transformation du signal numérique temporel en signal fréquentiel par exemple par transformée de Fourier rapide et filtrage des fréquences fondamentales du moteur et de leurs harmoniques, on examine si les amplitudes les plus élevées du signal fréquentiel sont supérieures à un premier seuil bas d'amplitude et dans l'affirmative, si elles sont également supérieures à un second seuil haut d'amplitudes. Si les amplitudes les plus élevées sont supérieures au seuil bas, on examine si sur plusieurs séquences de données, par exemple "a" séquences de données, le degré d'harmonique différentiel est le même pour b séquences au moins, a et b sont des entiers supérieurs ou égaux à 1, b ≤ a. Le degré ou ratio d'harmonique différentielle est la valeur du rapport entre une valeur de fréquence d'amplitude supérieure à l'un des seuils et la valeur de la fréquence de défaut.

Dans le cas du roulement, cette fréquence est $(F_{N2}-F_{N1})$ comme expliqué plus haut.

Si les valeurs de ces ratios restent constantes à un pourcentage d'erreur prédéterminé près, on en conclura que le défaut est présent.

On émettra un message de niveau 1 si le ratio d'harmonique reste constant pour au moins b séquences parmi a séquences et que le seuil d'amplitude est supérieur au second seuil haut d'amplitude. Cela signifiera en effet que le défaut est présent et suffisamment bien marqué pour provoquer ce haut niveau d'amplitude.

On émettra un message de niveau 2 si le ratio d'harmonique reste constant pour au moins b séquences parmi a séquences et que le niveau d'amplitude est supérieur au second seuil bas tout en étant inférieur au second seuil haut d'amplitude.

On émettra un message de niveau 3 si le niveau d'amplitude reste inférieur au premier seuil de niveau bas et que les tests de cohérence spectrale donnent l'un des résultats suivants :

1) si comme indiqué plus haut le test de cohérence spectrale effectué avec $V = F_{N2} - F_{N1}$ conduit à un ratio de détection supérieur ou égal au second seuil de ratio de détection prédéterminé,

2) si comme indiqué plus haut, le test de cohérence spectrale effectué avec $V = N_1$ ou $N_2$ conduit à un ratio de détection supérieur ou égal au second seuil de ratio prédéterminé et que de plus les pics de cohérence sont espacées d'une valeur $(f_{N2}-f_{N1})$ pour au moins b séquences parmi a,

3) si comme indiqué en 2) ci-dessus, le test de cohérence spectrale effectué avec $V = N_1$ ou $N_2$ conduit à un ratio de détection supérieur ou égal au second seuil de ratio prédéterminé et que de plus le ratio d'harmonique différentielle entre l'une des fréquences pour laquelle un pic de cohérence a été détecté et la fréquence de défaut est stable pour plusieurs séquences traitées, c'est-à-dire reste constant pour b séquences parmi a séquences.

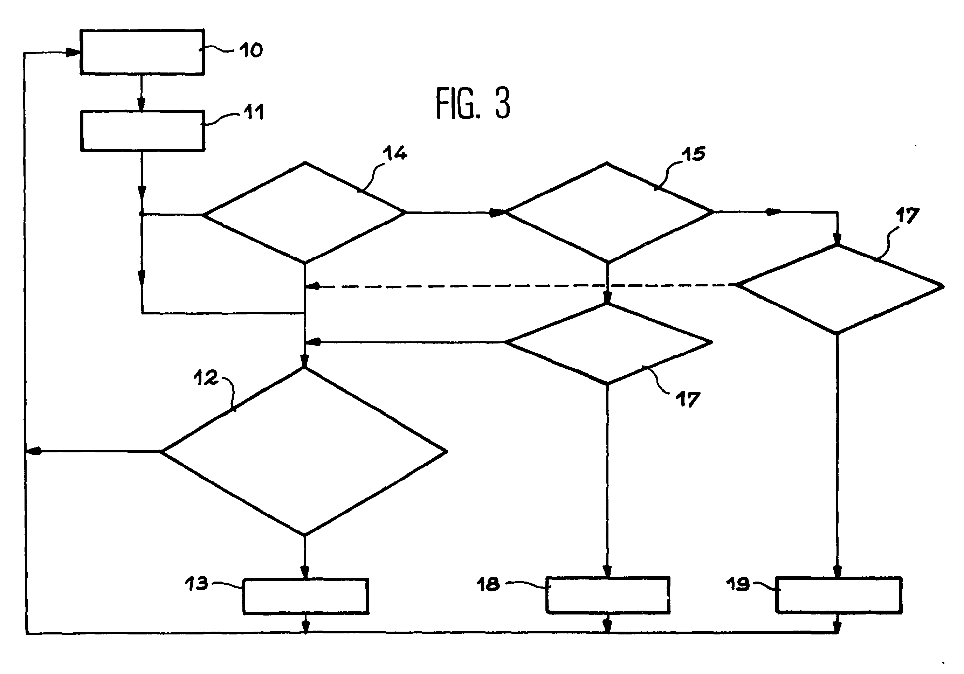

Le mode de traitement et d'émission d'alerte ci-dessus décrit est résumé en figure 3.

En une étape 10, on procède à l'acquisition et à la sauvegarde par exemple par mémorisation des données en provenance d'un capteur d'un signal vibratoire d'accélération. Comme déjà expliqué plus haut on ne retient pas pour sauvegarde les séquences pour lesquelles le régime moteur est instable au cours de l'enregistrement de la fréquence.

En une étape 11 on effectue la transformation de Fourier rapide (FFT) et un filtrage pour éliminer les fréquences résultant de la rotation d'ensembles rotor à fort moment cinétique comme les corps haute et basse pression.

Dans une étape 12 on effectue des calculs de cohérence spectrale avec des décalages V correspondant à la fréquence de défaut, ou à chacune des fréquences résultant de la rotation des corps haute et basse pression. A une étape 13, on émet éventuellement un message de niveau 3 si l'un des résultats 1, 2 ou 3 décrit plus haut est obtenu.

Parallèlement à l'étape 12, après l'étape 11 de transformation en signal fréquentiel et de filtrage on compare dans une étape 14, le niveau d'amplitude des fréquences de plus fortes amplitudes du signal fréquentiel a un premier seuil bas.

Si de façon jugée stable, parce que apparaissant sur un nombre de séquences enregistrées égal à 3 (b = a = 3) des amplitudes de fréquence sont supérieures au premier seuil bas, on compare dans une étape 15 ces amplitudes à un second seuil haut.

Si à l'étape 14 on constate que les amplitudes les plus importantes du signal fréquentiel sont inférieures au premier seuil bas, le traitement parallèle s'arrête. Dans un tel cas, le traitement ne comporte que les étapes 10, 11, 12 et éventuellement 13.

Si par contre il est constaté que les amplitudes les plus importantes du signal fréquentiel sont supérieures de façon stable au premier seuil bas on regardera à une étape 17, si le degré d'harmonique différentiel de l'une au moins des fréquences supérieures au seuil bas est stable. Dans l'affirmative on émettra un message de niveau 2 à l'étape 18. Si de plus les amplitudes les plus importantes du signal sont supérieures au second seuil haut et qu'on constate à l'étape 17 que le degré d'harmonique différentiel est stable alors on émettra à une étape 19 un message de niveau 1.

Le degré ou ratio d'harmonique différentiel est obtenu en divisant la fréquence du spectre présentant une amplitude élevée par la fréquence de défaut ($F_{N2}$ - $F_{N1}$).

La valeur seuil du pic de cohérence, au-dessus de laquelle on estime qu'il y a cohérence, est fixée à 0,8.

Dans l'exemple particulier représenté en figure 3, on a pris a = b = 3. En résumé selon le mode préféré de réalisation de l'invention un message de niveau 3 est émis uniquement lorsque la détection du défaut ne résulte que du calcul de cohérence.

Ce message est émis si avec V = ($f_{N2}$-$f_{N1}$) le ratio entre le nombre de fois où l'on a un pic de cohérence supérieur au premier seuil, par exemple 0,8, et le nombre p de séquences examinées est supérieur au second seuil prédéterminé.

Si la détection est obtenue en faisant le calcul de cohérence avec $F_{N1}$ ou $f_{N2}$ on regarde de plus si parmi des séquences examinées au cours de ce calcul il y en a au moins b parmi a pour lesquelles le ratio d'harmonique différentielle est constant.

Les nombres p, a et b et le second seuil prédéterminé sont indépendants les uns des autres. Cependant par construction, le second seuil prédéterminé est inférieur à 1, et b ≤ a.

Les messages de niveau 2 et 3 sont émis si de façon stable, c'est-à-dire pour b séquences au moins prises parmi a les amplitudes sont supérieures au premier seuil bas ou au premier seuil haut. On remarque évidemment que si une amplitude est supérieure au seuil haut elle est nécessairement supérieure au seuil bas. Il peut donc arriver que l'on doive émettre simultanément un message de niveau 2 et un message de niveau 1. Dans ce cas, on émettra uniquement le message de niveau 1.

A l'étape 17, les fréquences à prendre en compte pour effectuer le calcul du ratio d'harmonique différentiel pourront être déterminées par un calcul de cohérence spectrale avec V = ($f_{N2}$ - $f_{N1}$). La différence avec l'étape 12 cas 1 ou 2 est qu'à l'étape 17 on regarde la constance du ratio d'harmonique différentielle.

## Revendications

1. Procédé de détection précoce de l'apparition d'un défaut d'une pièce d'un moteur, le procédé comportant :

   - une phase préliminaire d'études pour identifier des raies spectrales fréquentielles présentes au cours du fonctionnement de moteur de même conception en l'absence de défaut, puis en présence du défaut de façon à identifier des raies spectrales spécifiques du défaut, ceci pour au moins un régime de fonctionnement du moteur,
   - une phase de détection au cours de laquelle de façon itérative au cours du fonctionnement de moteur :

       - on acquiert au cours d'une séquence d'acquisition une suite d'échantillons numériques représentative d'un signal vibratoire d'accélération,
       - on vérifie qu'au cours de ladite séquence d'acquisition le régime du moteur est resté stable et on applique en temps réel au cours du fonctionnement du moteur ou en temps différé auxdites séquences stables acquises les traitements ci-après,
       - on transforme le signal acquis par échantillonnage temporel en un signal fréquentiel, en éliminant les fréquences fondamentales du moteur et leurs harmoniques,
       - on effectue au moins un calcul de cohérence normée entre ledit signal fréquentiel et le même signal fréquentiel décalé d'une valeur de fréquence correspondant à la valeur d'une des fréquences spécifiques du défaut, détectée au cours de la phase préliminaire,
       - on compare la valeur d'un pic de cohérence obtenu par le calcul de cohérence à un premier seuil et on mémorise une valeur de détection 1 si ce pic est supérieur à ce premier seuil et une valeur 0 dans le cas-contraire,
       - on fait la somme de p valeurs de détection mémorisées que l'on divise par p pour obtenir un ratio de détection,
       - on décide qu'un défaut est présent si le ratio de détection est supérieur ou égal à un second seuil prédéterminé.

2. Procédé selon la revendication 1, dans lequel on définit des plages d'intérêt et on vérifie préalablement à l'exécution d'une séquence d'acquisition d'échantillons que le régime du moteur est dans une des plages d'intérêt.

3. Procédé selon l'une des revendications 1 ou 2, **caractérisé en ce que** les p valeurs de détection utilisées pour établir la valeur du ratio de détection résultent du traitement de séquences acquises qui sont les plus récentes dans chacune des plages de régime moteur au cours desquelles ces séquences ont été acquises.

4. Procédé selon la revendication 1, **caractérisé en**

**ce qu'**en addition à la détection d'un défaut on émet un message de détection ayant un niveau le niveau étant variable en fonction de conditions liées à la détection.

5. Procédé selon la revendication 4, **caractérisé en ce qu'**on émet un message de niveau 3 si le pic de cohérence spectrale est obtenu pour un décalage de fréquence V correspondant à une fréquence ($F_{N2}$ - $F_{N1}$) non modulée spécifiques de la fréquence du défaut, $F_{N1}$ et $F_{N2}$ étant les fréquences de rotation de masses importantes du moteur.

6. Procédé selon la revendication 4, **caractérisé en ce qu'**on émet un message de niveau 3, si des pics de cohérence spectrale sont obtenus par un décalage fréquentiel V correspondant à l'une des fréquences fondamentales du moteur et, que de plus, des pics de cohérence de niveau supérieur au second seuil de cohérence sont espacés entre eux d'une valeur de fréquence correspondant à une fréquence ($F_{N2}$ - $F_{N1}$) non modulée spécifique de la fréquence de défaut, $F_{N1}$ et $F_{N2}$ étant les fréquences de rotation de masses importantes du moteur.

7. Procédé selon la revendication 5, **caractérisé en ce qu'**on émet un message de niveau 3 si un ou plusieurs pics de cohérence sont obtenus avec un décalage fréquentiel V correspondant à l'une des fréquences fondamentales du moteur et, que de plus, le ratio entre la fréquence pour laquelle l'un au moins des pics de cohérence est supérieur au second seuil de cohérence et l'une des fréquences correspondant à une fréquence ($F_{N2}$ - $F_{N1}$) non modulé spécifique de la présence du défaut, reste le même pour un nombre minimum b de séquences parmi un nombre prédéterminé a de séquences.

8. Procédé selon l'une des revendications 4 à 7, **caractérisé en ce qu'**en parallèle au traitement de cohérence on compare des amplitudes de fréquences composant le signal fréquentiel obtenu après transformation du signal temporel vibratoire d'accélération en signal fréquentiel à un premier seuil bas, et que si pour l'une des fréquences dont l'amplitude est supérieure à ce premier seuil bas, le ratio entre la fréquence correspondant à cette amplitude supérieure au premier seuil bas d'amplitude et l'une des fréquences correspondant à une fréquence ($F_{N2}$ - $F_{N1}$) non modulée spécifique de la présence du défaut reste le même pour un nombre prédéterminé de séquences on émet un message de niveau 2.

9. Procédé selon l'une des revendications 4 à 7, **caractérisé en ce qu'**en parallèle au traitement de cohérence on compare des amplitudes de fréquences composant le signal fréquentiel obtenu après transformation du signal temporel vibratoire d'accélération en signal fréquentiel à un second seuil haut, et que si pour l'une des fréquences dont l'amplitude est supérieure à ce second seuil haut, le ratio entre la fréquence correspondant à cette amplitude supérieure au second seuil haut d'amplitude et l'une des fréquences correspondant à une fréquence ($F_{N2}$ - $F_{N1}$) non modulée spécifique de la présence du défaut reste le même pour un nombre prédéterminé de séquences on émet un message de niveau 1.

**Claims**

1. Process for the early detection of the appearance of a fault in a component of an engine, the process comprising:

   - a preliminary phase of investigations to identify frequency spectral lines present in the course of the operation of an engine of like design in the absence of a fault, and in the presence of a fault so as to identify specific spectral lines of the fault, doing so for at least one speed regime of operation of the engine,
   - a phase of detection in the course of which in an iterative manner in the course of the engine operation:

      - a string of digital samples which is representative of an acceleration vibrational signal is acquired in the course of an acquisition sequence,
      - one checks that in the course of said acquisition sequence the speed regime of the engine has remained stable and the processing operations hereinbelow are applied in real time in the course of the operation of the motor or in non-real time to said stable sequences acquired,
      - one transforms the signal acquired by temporal sampling into a frequency signal, while eliminating the fundamental frequencies of the engine and their harmonics,
      - at least one normed coherence calculation is performed between said frequency signal and the same frequency signal shifted by a frequency value corresponding to the value of one of the specific frequencies of the fault, and which is detected in the course of the preliminary phase,
      - the value of a coherence peak obtained via the coherence calculation is compared with a first threshold and a 1 detection value is stored if this peak is greater than this first threshold and a 0 value in the contrary case,
      - p stored detection values are summed and the sum is divided by p to obtain a detection ratio,

- a fault is deemed to be present if the detection ratio is greater than or equal to a second predetermined threshold.

2. Process according to Claim 1, in which spans of interest are defined and one checks prior to the execution of a samples acquisition sequence that the speed regime of the engine is in one of the spans of interest.

3. Process according to either of Claims 1 and 2, **characterized in that** the p detection values used to establish the value of the detection ratio result from the processing of acquired sequences which are the most recent in each of the engine speed regime spans in the course of which these sequences were acquired.

4. Process according to Claim 1, **characterized in that**, in addition to the detection of a fault, a detection message having a level is issued, the level being variable as a function of detection-related conditions.

5. Process according to Claim 4, **characterized in that** a message of level 3 is issued if the spectral coherence peak is obtained for a frequency shift V corresponding to an unmodulated frequency ($F_{N2}$ - $F_{N1}$) specific to the frequency of the fault, $F_{N1}$ and $F_{N2}$ being the frequencies of rotation of significant masses of the engine.

6. Process according to Claim 4, **characterized in that** a message of level 3 is issued if spectral coherence peaks are obtained via a frequency shift V corresponding to one of the fundamental frequencies of the engine and, **characterized in that** moreover, coherent peaks of level greater than the threshold are spaced apart by a frequency value corresponding to an unmodulated frequency ($F_{N2}$ - $F_{N1}$) specific to the fault frequency, $F_{N1}$ and $F_{N2}$ being the frequencies of rotation of significant masses of the engine.

7. Process according to Claim 5, **characterized in that** a message of level 3 is issued if one or more coherence peaks are obtained with a frequency shift V corresponding to one of the fundamental frequencies of the engine and, **characterized in that** moreover, the ratio between the frequency for which at least one of the coherence peaks is greater than the second coherence threshold and one of the frequencies corresponding to an unmodulated frequency ($F_{N2}$ - $F_{N1}$) specific to the presence of the fault remains the same for a minimum number b of sequences out of a predetermined number a of sequences.

8. Process according to one of Claims 4 to 7, **characterized in that,** in parallel with the coherence processing, amplitudes of frequencies making up the frequency signal obtained after transforming the acceleration vibrational temporal signal into a frequency signal are compared with a first low threshold, and **characterized in that** if for one of the frequencies whose amplitude is greater than this first low threshold the ratio between the frequency corresponding to this amplitude greater than the first low threshold of amplitude and one of the frequencies corresponding to an unmodulated frequency ($F_{N2}$ - $F_{N1}$) specific to the presence of the fault remains the same for a predetermined number of sequences, a message of level 2 is issued.

9. Process according to one of Claims 4 to 7, **characterized in that**, in parallel with the coherence processing, amplitudes of frequencies making up the frequency signal obtained after transforming the acceleration vibrational temporal signal into a frequency signal are compared with a second high threshold, and **characterized in that** if for one of the frequencies whose amplitude is greater than this second high threshold the ratio between the frequency corresponding to this amplitude greater than the second high threshold of amplitude and one of the frequencies corresponding to an unmodulated frequency ($F_{N2}$ - $F_{N1}$) specific to the presence of the fault remains the same for a predetermined number of sequences, a message of level 1 is issued.

**Patentansprüche**

1. Verfahren zur Früherkennung des Auftretens eines Defekts eines Bauteils eines Motors, wobei das Verfahren aufweist:

- eine Vorphase von Untersuchungen, um Frequenzspektrallinien zu identifizieren, die während des Betriebs eines Motors gleicher Bauart in Abwesenheit eines Defekts und dann in Gegenwart des Defekts vorhanden sind, um für den Defekt spezifische Spektrallinien zu identifizieren, und dies für mindestens eine Betriebsdrehzahl des Motors,
- eine Erkennungsphase, während der iterativ während des Motorbetriebs:

- während einer Erfassungssequenz eine Folge von digitalen Tastproben erfasst wird, die für ein Beschleunigungs-Schwingungssignal repräsentativ ist,
- überprüft wird, ob während der Erfassungssequenz die Drehzahl des Motors stabil geblieben ist, und in Echtzeit während des Betriebs des Motors oder zeitlich verzögert an den erfassten stabilen Sequenzen die folgenden Verarbeitungen durchgeführt werden

- das durch zeitliche Abtastung erfasste Signal wird in ein Frequenzsignal umgewandelt, indem die Grundfrequenzen des Motors und ihre Harmonischen entfernt werden,

- es wird mindestens eine Berechnung einer normierten Kohärenz zwischen dem Frequenzsignal und dem gleichen Frequenzsignal durchgeführt, das um einen Frequenzwert versetzt ist, der dem Wert einer der spezifischen Frequenzen des Defekts entspricht, die während der Vorphase erkannt wurde,

- der Wert eines durch die Kohärenzberechnung erhaltenen Kohärenzpeaks wird mit einem ersten Schwellwert verglichen, und es wird ein Erkennungswert 1, wenn dieser Peak höher als dieser erste Schwellwert ist, und ein Wert 0 im gegenteiligen Fall gespeichert,

- es wird die Summe von p gespeicherten Erkennungswerten gebildet, die durch p dividiert wird, um einen Erkennungsquotienten zu erhalten,

- es wird bestimmt, dass ein Defekt vorhanden ist, wenn der Erkennungsquotient höher als ein oder gleich einem zweiten vorbestimmten Schwellwert ist.

2. Verfahren nach Anspruch 1, bei dem Interessenbereiche definiert werden und vor der Ausführung einer Tastproben-Erfassungssequenz geprüft wird, ob die Drehzahl des Motors sich in einem der Interessenbereiche befindet.

3. Verfahren nach einem der Ansprüche 1 oder 2, **dadurch gekennzeichnet, dass** die p Erkennungswerte, die verwendet werden, um den Wert des Erkennungsquotienten zu ermitteln, aus der Verarbeitung von erfassten Sequenzen resultieren, die in jedem der Motordrehzahlbereiche die neuesten sind, während denen diese Sequenzen erfasst wurden.

4. Verfahren nach Anspruch 1, **dadurch gekennzeichnet, dass** zusätzlich zur Erkennung eines Defekts eine Erkennungsmitteilung gesendet wird, die eine Ebene hat, wobei die Ebene in Abhängigkeit von mit der Erkennung verbundenen Bedingungen variiert.

5. Verfahren nach Anspruch 4**, dadurch gekennzeichnet, dass** eine Mitteilung der Ebene 3 gesendet wird, wenn der Peak spektraler Kohärenz für eine Frequenzverschiebung V erhalten wird, die einer für die Frequenz des Defekts spezifischen, nicht modulierten Frequenz ($F_{N2}$-$F_{N1}$) entspricht, wobei $F_{N1}$ und $F_{N2}$ die Drehfrequenzen von großen Massen des Motors sind.

6. Verfahren nach Anspruch 4, **dadurch gekennzeichnet, dass** eine Mitteilung der Ebene 3 gesendet wird, wenn Peaks spektraler Kohärenz durch eine einer der Grundfrequenzen des Motors entsprechende Frequenzverschiebung V erhalten werden, und außerdem Kohärenzpeaks einer Ebene höher als der zweite Kohärenzschwellwert einen Abstand um einen Frequenzwert zueinander haben, der einer für die Frequenz eines Defekts spezifischen, nicht modulierten Frequenz ($F_{N2}$-$F_{N1}$) entspricht, wobei $F_{N1}$ und $F_{N2}$ die Drehfrequenzen von großen Massen des Motors sind.

7. Verfahren nach Anspruch 5, **dadurch gekennzeichnet, dass** eine Mitteilung der Ebene 3 gesendet wird, wenn einer oder mehrere Kohärenzpeaks mit einer Frequenzverschiebung V entsprechend einer der Grundfrequenzen des Motors erhalten werden, und außerdem das Verhältnis zwischen der Frequenz, bei der mindestens einer der Kohärenzpeaks höher als der zweite Kohärenzschwellwert ist, und einer der Frequenzen, die einer für das Vorhandensein des Defekts spezifischen, nicht modulierten Frequenz ($F_{N2}$-$F_{N1}$) entspricht, für eine Mindestanzahl b von Sequenzen aus einer vorbestimmten Anzahl a von Sequenzen gleich bleibt.

8. Verfahren nach einem der Ansprüche 4 bis 7, **dadurch gekennzeichnet, dass** parallel zur Kohärenzverarbeitung Amplituden von Frequenzen, die das nach Umwandlung des zeitlichen Beschleunigungs-Schwingungssignals in ein Frequenzsignal erhaltene Frequenzsignal bilden, mit einem ersten niedrigen Schwellwert verglichen werden, und dass, wenn für eine der Frequenzen, deren Amplitude höher ist als dieser erste niedrige Schwellwert, das Verhältnis zwischen der dieser höheren Amplitude als der erste niedrige Amplitudenschwellwert entsprechenden Frequenz und einer der Frequenzen, die einer für das Vorhandensein des Defekts spezifischen, nicht modulierten Frequenz ($F_{N2}$-$F_{N1}$) entspricht, für eine vorbestimmte Anzahl von Sequenzen gleich bleibt, eine Mitteilung der Ebene 2 gesendet wird.

9. Verfahren nach einem der Ansprüche 4 bis 7, **dadurch gekennzeichnet, dass** parallel zur Kohärenzverarbeitung Amplituden von Frequenzen, die das nach Umwandlung des zeitlichen Beschleunigungs-Schwingungssignals in ein Frequenzsignal erhaltene Frequenzsignal bilden, mit einem zweiten hohen Schwellwert verglichen werden, und dass, wenn für eine der Frequenzen, deren Amplitude höher ist als dieser zweite hohe Schwellwert, das Verhältnis zwischen der dieser höheren Amplitude als der zweite hohe Amplitudenschwellwert entsprechenden Frequenz und einer der Frequenzen, die einer für das Vorhandensein des Defekts spezifischen, nicht modulierten Frequenz ($F_{N2}$-$F_{N1}$) entspricht, für eine vorbestimmte Anzahl von Sequenzen gleich bleibt, eine Mitteilung der Ebene 1 gesendet wird.

FIG. 1

FIG. 2 A

FIG. 2 B

FIG. 3

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0889313 A